# EUROPEAN PATENT APPLICATION

(11) **EP 4 586 073 A1**
(43) Date of publication of application: **16.07.2025**
(21) Application number: 22961073.8
(22) Date of filing: 28.09.2022
(51) Int. Cl.: G06F 3/16, G06F 3/04842, G06F 3/04847, H04W 4/80, H04R 1/40

(54) **DISPLAY DEVICE**

(71) Applicant: LG Electronics Inc., Yeongdeungpo-gu Seoul 07336 (KR)
(72) Inventor: KIM, Taeyoung, Seoul 06772 (KR); KIM, Sanghun, Seoul 06772 (KR); JEONG, Hyojeong, Seoul 06772 (KR)
(74) Representative: Schornack, Oliver
(86) International application number: PCT/KR2022/014596
(87) International publication number: WO 2024/071470

(57) **Abstract**

A display device according to an embodiment of the present invention comprises: a speaker; a display for displaying a volume control UI for controlling the volume of audio output through the speaker; and a wireless communication interface for connecting to at least one external speaker, wherein if the display device is connected to the external speaker when a volume control command is received, a volume control UI for controlling the volume of the speaker and external speaker can be displayed and the volume of the speaker and external speaker corresponding to the selected volume control UI can be controlled. adjustment UI.

## Description

### [Technical Field]

The present disclosure relates to volume adjustment of an external speaker connected to a display device.

### [Background Art]

In addition to the speakers included in the display device, external speakers with the desired sound performance can be connected and used via wireless communication or other methods. Recently, the number of users who connect external speakers to display devices via wireless communication methods such as Bluetooth is increasing.

A plurality of such external speakers can be connected to the display device. Accordingly, the display device can output audio of an image being played on the display device from the plurality of external speakers. The user can create a surround sound environment by differently disposing each of the plurality of external speakers, thereby increasing the immersion in the image being played.

Meanwhile, when using a plurality of external speakers connected to a display device, volume adjustment of only some of the plurality of external speakers may be required. For example, when a user is watching an image near one external speaker and then moves near another external speaker, the user may want to increase the volume of one external speaker and decrease the volume of the other external speaker.

However, when a display device 100 and a plurality of external speakers are connected, there is a problem in that it is difficult to know which of the plurality of external speakers is controlling the volume when there is a volume adjustment command.

### [Disclosure]

### [Technical Problem]

An object of the present disclosure is to enable the volume of any one of a plurality of external speakers to be adjusted.

An object of the present disclosure is to enable the volume of two or more external speakers among a plurality of external speakers to be adjusted simultaneously.

### [Technical Solution]

A display device according to an embodiment of the present disclosure may include a speaker; a display that displays a volume adjustment UI for adjusting the volume of audio output through the speaker; a wireless communication interface that connects to at least one external speaker; and a controller that displays the volume adjustment UI for adjusting the volume of the speaker and the external speaker when connected to the external speaker upon receiving a volume adjustment command.

A display device according to an embodiment of the present disclosure may transmit a notification signal to the external speaker corresponding to the selected volume adjustment UI when the volume adjustment UI for adjusting the volume of the external speaker is selected.

A notification signal transmitting from a display device according to an embodiment of the present disclosure may include one of a notification sound signal, an LED notification signal, and a vibration signal.

A display device according to an embodiment of the present disclosure may display a plurality of volume adjustment Uls for adjusting the volume of each of the plurality of external speakers when receiving the volume adjustment command, if there are a plurality of external speakers connected to the display device.

A display device according to an embodiment of the present disclosure may simultaneously adjust the volume of each of the plurality of external speakers corresponding to each of the plurality of volume adjustment Uls when two or more of the plurality of volume adjustment Uls are selected and then a volume adjustment command is received.

A display device according to an embodiment of the present disclosure may display a plurality of volume adjustment Uls for adjusting the volume of each of the plurality of external speakers based on the priority of each of the plurality of external speakers.

A display device according to an embodiment of the present disclosure may obtain the priority based on the volume of each of the plurality of external speakers.

A display device according to an embodiment of the present disclosure may obtain the priority based on the distance from each of the plurality of external speakers.

A display device according to an embodiment of the present disclosure may obtain the priority based on the order in which each of the plurality of external speakers is connected to the display device.

A display device according to an embodiment of the present disclosure may obtain the priority based on the number of times each of the plurality of external speakers is connected to the display device.

### [Advantageous Effect]

According to the present disclosure, a sound environment optimized for a user can be created.

In addition, according to the present disclosure, a user can easily adjustl the volume of some of a plurality of speakers, and minimize the decrease in immersion in an image being watched during the volume adjustment process.

### [Description of Drawings]

Fig. 1 is a block diagram illustrating a configuration of a display device according to an embodiment of the present disclosure.
Fig. 2 is a block diagram illustrating a remote control device according to an embodiment of the present disclosure.
Fig. 3 is a view illustrating an actual configuration of a remote control device according to an embodiment of the present disclosure..
Fig. 4 is a view illustrating an example of utilizing the remote control device according to an embodiment of the present disclosure.
Fig. 5 is a ladder diagram illustrating a method for a display device according to an embodiment of the present disclosure.
Fig. 6 is an exemplary drawing for explaining a screen on which a display device according to an embodiment of the present disclosure displays a volume adjustment UI.
Fig. 7 is an exemplary drawing for explaining a screen on which a display device according to an embodiment of the present disclosure displays a volume adjustment **UI** of a speaker and an external speaker.
Fig. 8 is an exemplary drawing for explaining a screen displayed by a display device according to an embodiment of the present disclosure to simultaneously adjust two or more volume adjustment UIs among volume adjustment Uls.
Fig. 9 is an exemplary drawing for explaining a screen displayed by a display device according to an embodiment of the present disclosure based on the priority of each of a plurality of external speakers.
Fig. 10 is an exemplary drawing for explaining a screen displayed by a display device according to an embodiment of the present disclosure to display a menu for changing the usage status setting of the display device or external speakers.

### [Best Mode]

Hereinafter, embodiments relating to the present disclosure will be described in detail with reference to the accompanying drawings. The suffixes "interface", "module" and "unit" for components used in the description below are assigned or mixed in consideration of easiness in writing the specification and do not have distinctive meanings or roles by themselves.

A display device according to an embodiment of the present disclosure, for example, as an artificial display device that adds a computer supporting function to a broadcast receiving function, can have an easy-to-use interface such as a writing input device, a touch screen, or a spatial remote control device as an Internet function is added while fulfilling the broadcast receiving function. Then, with the support of a wired or wireless Internet function, it is possible to perform an e-mail, web browsing, banking, or game function in access to Internet and computers. In order to perform such various functions, standardized general purpose OS can be used.

Accordingly, since various applications are freely added or deleted on a general purpose OS kernel, a display device described herein, for example, can perform various user-friendly functions. The display device, in more detail, can be a network TV, Hybrid Broadcast Broadband TV (HBBTV), smart TV, light-emitting diode (LED) TV, organic light-emitting diode (OLED) TV, and so on and in some cases, can be applied to a smartphone.

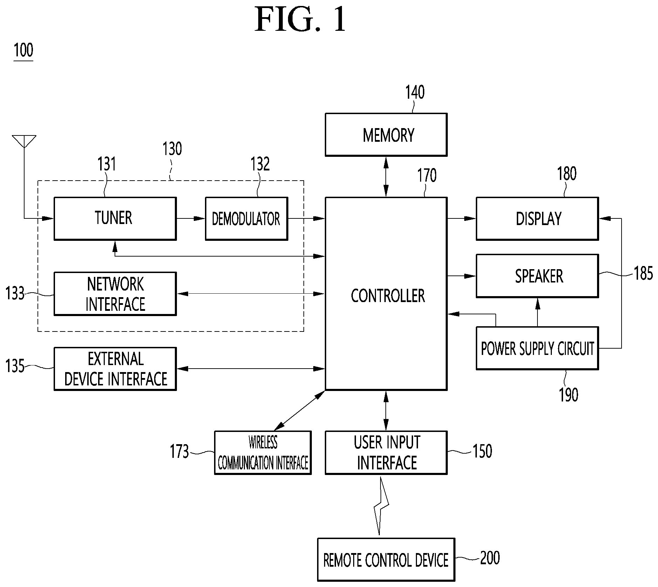

Fig. 1 is a block diagram illustrating a configuration of a display device according to an embodiment of the present disclosure.

Referring to Fig. 1, a display device 100 may include a broadcast reception module 130, an external device interface unit 135, a storage unit 140, a user input unit 150, a control unit 170, a wireless communication interface unit 173, a display unit 180, an audio output unit 185, and a power supply unit 190.

The broadcast reception module 130 may include a tuner 131, a demodulator 132, and a network interface 133.

The tuner 131 may select a specific broadcast channel according to a channel selection command. The tuner 131 may receive broadcast signals for the selected specific broadcast channel.

The demodulation unit 132 may divide the received broadcast signals into video signals, audio signals, and broadcast program-related data signals, and may restore the divided video signals, audio signals, and data signals into an output available form.

The external device interface unit 135 may receive an application or an application list in an adjacent external device and deliver the application or the application list to the control unit 170 or the storage unit 140.

The external device interface unit 135 may provide a connection path between the display device 100 and an external device. The external device interface unit 135 may receive at least one of an image or audio outputted from an external device that is wirelessly or wiredly connected to the display device 100 and deliver the received image or the audio to the controller. The external device interface unit 135 may include a plurality of external input terminals. The plurality of external input terminals may include an RGB terminal, at least one High Definition Multimedia Interface (HDMI) terminal, and a component terminal.

An image signal of an external device inputted through the external device interface unit 135 may be outputted through the display unit 180. A sound signal of an external device inputted through the external device interface unit 135 may be outputted through the audio output unit 185.

An external device connectable to the external device interface unit 135 may be one of a set-top box, a Blu-ray player, a DVD player, a game console, a sound bar, a smartphone, a PC, a USB Memory, and a home theater system but this is just exemplary.

The network interface 133 may provide an interface for connecting the display device 100 to a wired/wireless network comprising internet network. The network interface 133 may transmit or receive data to or from another user or another electronic device through an accessed network or another network linked to the accessed network.

Additionally, some content data stored in the display device 100 may be transmitted to a user or an electronic device, which is selected from other users or other electronic devices pre-registered in the display device 100.

The network interface unit 133 may access a predetermined webpage through an accessed network or another network linked to the accessed network. In other words, the network interface unit 133 may transmit or receive data to or from a corresponding server by accessing a predetermined webpage through the network.

The network interface unit 133 may receive content or data provided from a content provider or a network operator. In other words, the network interface unit 133 may receive content, such as movies, advertisements, games, VODs, and broadcast signals, which are provided from the content provider or the network operator, and information relating thereto through the network.

In addition, the network interface unit 133 may receive firmware update information and update files provided from the network operator, and may transmit data to the Internet or content provider or the network operator.

The network interface 133 may select and receive a desired application among applications open to the air, through network.

The storage unit 140 may store signal-processed image, voice, or data signals stored by a program in order for each signal processing and control in the control unit 170.

In addition, the storage unit 140 may perform a function for temporarily storing image, voice, or data signals output from the external device interface unit 135 or the network interface unit 133, and may store information on a predetermined image through a channel memory function.

The storage unit 140 may store an application or an application list input from the external device interface unit 135 or the network interface unit 133.

The display device 100 may play content files (e.g., video files, still image files, music files, document files, application files, etc.) stored in the storage unit 140, and may provide the content files to a user.

The user input unit 150 may transmit signals input by a user to the control unit 170, or may transmit signals from the control unit 170 to a user. For example, the user input unit 150 may receive or process control signals such as power on/off, channel selection, and screen setting from the remote control device 200 or transmit control signals from the control unit 170 to the remote control device 200 according to various communication methods such as Bluetooth, Ultra Wideband (WB), ZigBee, Radio Frequency (RF), and IR communication methods.

In addition, the user input unit 150 may transmit, to the control unit 170, control signals input from local keys (not illustrated) such as a power key, a channel key, a volume key, and a setting key.

Image signals that are image-processed by the control unit 170 may be input to the display unit 180 and displayed as images corresponding to the image signals. In addition, image signals that are image-processed by the control unit 170 may be input to an external output device through the external device interface unit 135.

Voice signals processed by the control unit 170 may be output to the audio output unit 185. In addition, voice signals processed by the control unit 170 may be input to the external output device through the external device interface unit 135.

Additionally, the control unit 170 may control overall operations of the display device 100.

In addition, the control unit 170 may control the display device 100 by a user command or an internal program input through the user input unit 150, and may access the network to download a desired application or application list into the display device 100.

The control unit 170 may output channel information selected by a user together with the processed image or voice signals through the display unit 180 or the audio output unit 185.

In addition, the control unit 170 may output image signals or voice signals of an external device such as a camera or a camcorder, which are input through the external device interface unit 135, through the display unit 180 or the audio output unit 185, according to an external device image playback command received through the user input unit 150.

Moreover, the control unit 170 may control the display unit 180 to display images, and may control the display unit 180 to display broadcast images input through the tuner 131, external input images input through the external device interface unit 135, images input through the network interface unit, or images stored in the storage unit 140. In this case, an image displayed on the display unit 180 may be a still image or video and also may be a 2D image or a 3D image.

Additionally, the control unit 170 may play content stored in the display device 100, received broadcast content, and external input content input from the outside, and the content may be in various formats such as broadcast images, external input images, audio files, still images, accessed web screens, and document files.

Moreover, the wireless communication unit 173 may perform wired or wireless communication with an external device. The wireless communication unit 173 may perform short-range communication with an external device. For this, the wireless communication unit 173 may support short-range communication by using at least one of Bluetooth^{™}, Bluetooth Low Energy (BLE), Radio Frequency Identification (RFID), Infrared Data Association (IrDA), Ultra Wideband (UWB), ZigBee, Near Field Communication (NFC), Wireless-Fidelity (Wi-Fi), Wi-Fi Direct, and Wireless Universal Serial Bus (USB) technologies. The wireless communication unit 173 may support wireless communication between the display device 100 and a wireless communication system, between the display device 100 and another display device 100, or between networks including the display device 100 and another display device 100 (or an external server) through wireless area networks. The wireless area networks may be wireless personal area networks.

Herein, the other display device 100 may be a mobile terminal such as a wearable device (for example, a smart watch, a smart glass, and a head mounted display (HMD)) or a smartphone, which is capable of exchanging data (or inter-working) with the display device 100. The wireless communication unit 173 may detect (or recognize) a wearable device capable of communication around the display device 100.

Furthermore, if the detected wearable device is a device authenticated to communicate with the display device 100, the control unit 170 may transmit at least part of data processed in the display device 100 to the wearable device through the wireless communication unit 173. Therefore, a user of the wearable device may use the data processed by the display device 100 through the wearable device.

The display unit 180 may convert image signals, data signals, or on-screen display (OSD) signals, which are processed in the control unit 170, or images signals or data signals, which are received in the external device interface unit 135, into R, G, and B signals to generate driving signals.

Furthermore, the display device 100 illustrated in Fig. 1 is just one embodiment of the present disclosure and thus, some of the components illustrated may be integrated, added, or omitted according to the specification of the actually implemented display device 100.

In other words, if necessary, two or more components may be integrated into one component, or one component may be divided into two or more components. Additionally, a function performed by each block is to describe an embodiment of the present disclosure and its specific operation or device does not limit the scope of the present disclosure.

According to another embodiment of the present disclosure, unlike Fig. 1, the display device 100 may receive images through the network interface unit 133 or the external device interface unit 135 and play them without including the tuner 131 and the demodulation unit 132.

For example, the display device 100 may be divided into an image processing device such as a set-top box for receiving broadcast signals or contents according to various network services and a content playback device for playing content input from the image processing device.

**In** this case, an operating method of a display device according to an embodiment of the present disclosure described below may be performed by one of the display device described with reference to Fig. 1, an image processing device such as the separated set-top box, and a content playback device including the display unit 180 and the audio output unit 185.

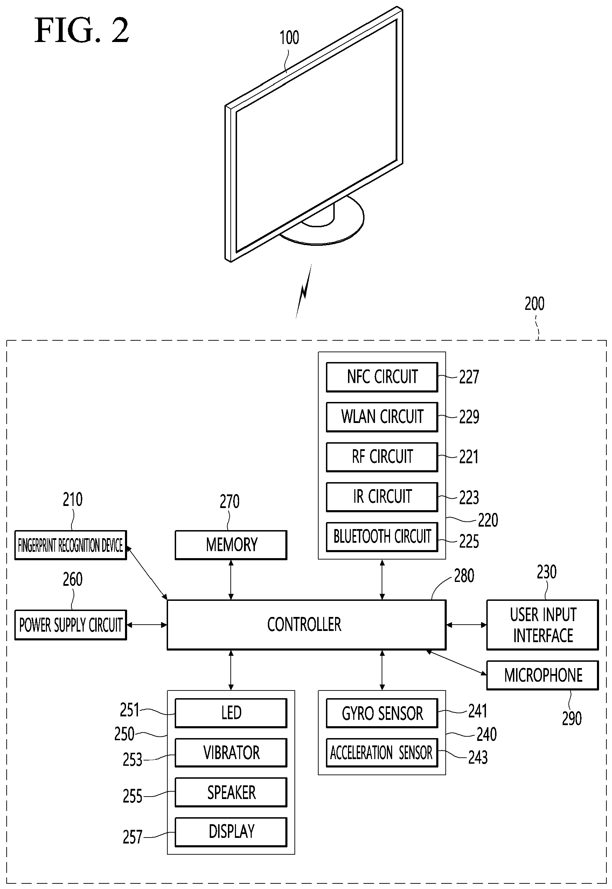

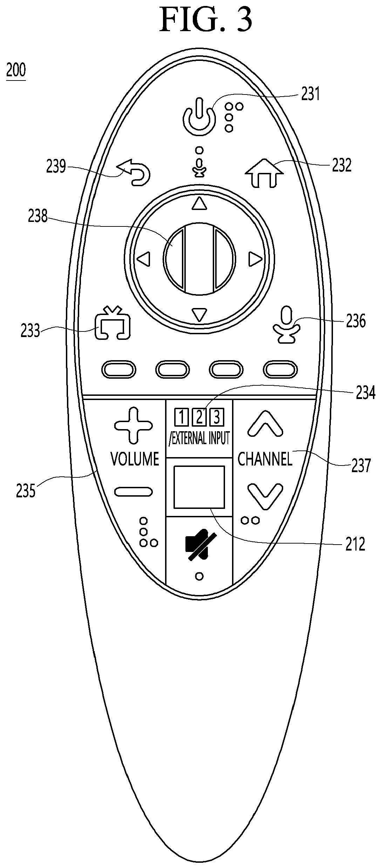

A remote control device according to an embodiment of the present disclosure will be described with reference to Figs. 2 and 3.

Fig. 2 is a block diagram illustrating a remote control device according to an embodiment of the present disclosure and Fig. 3 is a view illustrating an actual configuration of a remote control device according to an embodiment of the present disclosure.

First, referring to Fig. 2, a remote control device 200 may include a fingerprint recognition unit 210, a wireless communication unit 220, a user input unit 230, a sensor unit 240, an output unit 250, a power supply unit 260, a storage unit 270, a control unit 280, and a sound acquisition unit 290.

Referring to Fig. 2, the wireless communication unit 220 transmits/receives signals to/from an arbitrary any one of display devices according to the above-mentioned embodiments of the present disclosure.

The remote control device 200 may include a radio frequency (RF) module 221 capable of transmitting or receiving signals to or from the display device 100 according to an RF communication standard, and an IR module 223 capable of transmitting or receiving signals to or from the display device 100 according to an IR communication standard. In addition, the remote control device 200 may include a Bluetooth module 225 capable of transmitting or receiving signals to or from the display device 100 according to a Bluetooth communication standard. In addition, the remote control device 200 may include an NFC module 227 capable of transmitting or receiving signals to or from the display device 100 according to an NFC communication standard, and a wireless LAN (WLAN) module 229 capable of transmitting or receiving signals to or from the display device 100 according to a WLAN communication standard.

In addition, the remote control device 200 may transmit signals containing information on the movement of the remote control device 200 to the display device 100 through the wireless communication unit 220.

Moreover, the remote control device 200 may receive signals transmitted from the display device 100 through the RF module 221 and if necessary, may transmit a command for power on/off, channel change, and volume change to the display device 100 through the IR module 223.

The user input unit 230 may be configured with a keypad, a button, a touch pad, or a touch screen. A user may operate the user input unit 230 to input a command relating to the display device 100 to the remote control device 200. If the user input unit 230 includes a hard key button, a user may input a command relating to the display device 100 to the remote control device 200 through the push operation of the hard key button. This will be described with reference to Fig. 3.

Referring to Fig. 3, the remote control device 200 may include a plurality of buttons. The plurality of buttons may include a fingerprint recognition button 212, a power button 231, a home button 232, a live button 233, an external input button 234, a volume adjustment button 235, a voice recognition button 236, a channel change button 237, an OK button 238, and a back button 239.

The fingerprint recognition button 212 may be a button for recognizing a user's fingerprint. According to an embodiment of the present disclosure, the fingerprint recognition button 212 may perform a push operation and receive a push operation and a fingerprint recognition operation.

The power button 231 may be a button for turning on/off the power of the display device 100.

The home button 232 may be a button for moving to the home screen of the display device 100.

The live button 233 may be a button for displaying live broadcast programs.

The external input button 234 may be a button for receiving an external input connected to the display device 100.

The volume adjustment button 235 may be a button for adjusting a volume output from the display device 100.

The voice recognition button 236 may be a button for receiving user's voice and recognizing the received voice.

The channel change button 237 may be a button for receiving broadcast signals of a specific broadcast channel.

The OK button 238 may be a button for selecting a specific function, and the back button 239 may be a button for returning to a previous screen.

Fig. 2 is described again.

If the user input unit 230 includes a touch screen, a user may touch a soft key of the touch screen to input a command relating to the display device 100 to the remote control device 200. In addition, the user input unit 230 may include various kinds of input interfaces operable by a user, for example, a scroll key and a jog key, and this embodiment does not limit the scope of the present disclosure.

The sensor unit 240 may include a gyro sensor 241 or an acceleration sensor 243. The gyro sensor 241 may sense information on the movement of the remote control device 200.

For example, the gyro sensor 241 may sense information on an operation of the remote control device 200 on the basis of x, y, and z axes and the acceleration sensor 243 may sense information on a movement speed of the remote control device 200. Moreover, the remote control device 200 may further include a distance measurement sensor that senses a distance with respect to the display unit 180 of the display device 100.

The output unit 250 may output image or voice signals in response to the operation of the user input unit 230, or may output image or voice signals corresponding to signals transmitted from the display device 100.

A user may recognize whether the user input unit 230 is operated or the display device 100 is controlled through the output unit 250.

For example, the output unit 250 may include an LED module 251 for flashing, a vibration module 253 for generating vibration, a sound output module 255 for outputting sound, or a display module 257 for outputting an image, if the user input unit 230 is manipulated or signals are transmitted/received to/from the display device 100 through the wireless communication unit 220.

Additionally, the power supply unit 260 supplies power to the remote control device 200 and if the remote control device 200 does not move for a predetermined time, stops the power supply, so that power waste may be reduced.

The power supply unit 260 may resume the supply of power if a predetermined key provided at the remote control device 200 is operated.

The storage unit 270 may store various kinds of programs and application data required to control or operate the remote control device 200.

If the remote control device 200 transmits/receives signals wirelessly through the display device 100 and the RF module 221, the remote control device 200 and the display device 100 transmits/receives signals through a predetermined frequency band.

The control unit 280 of the remote control device 200 may store, in the storage unit 270, information on a frequency band for transmitting/receiving signals to/from the display device 100 paired with the remote control device 200 and refer to it.

The control unit 280 controls general matters relating to the control of the remote control device 200. The control unit 280 may transmit a signal corresponding to a predetermined key operation of the user input unit 230 or a signal corresponding to the movement of the remote control device 200 sensed by the sensor unit 240 to the display device 100 through the wireless communication unit 220.

In addition, the sound acquisition unit 290 of the remote control device 200 may acquire voice.

The sound acquisition unit 290 may include at least one microphone and acquire voice through the microphone.

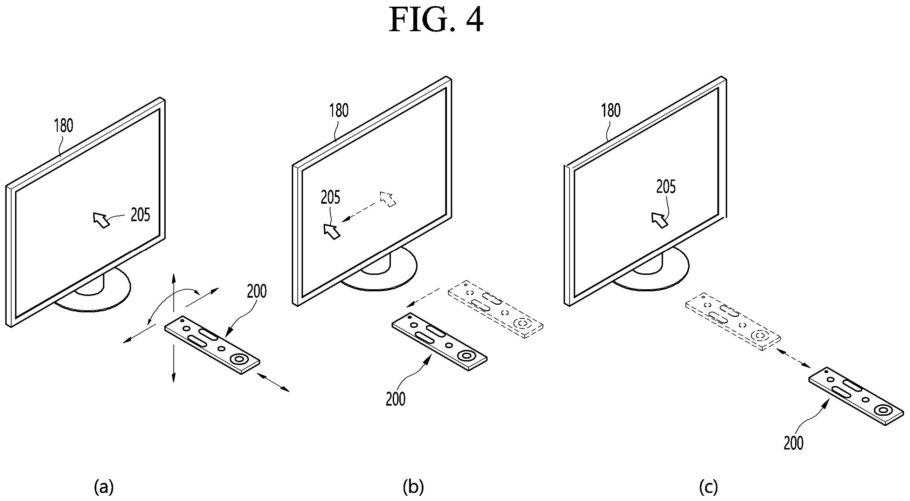

Next, Fig. 4 is described.

Fig. 4 is a view illustrating an example of utilizing a remote control device according to an embodiment of the present disclosure.

Fig. 4(a) illustrates that a pointer 205 corresponding to the remote control device 200 is displayed on the display unit 180.

A user may move or rotate the remote control device 200 vertically or horizontally. The pointer 205 displayed on the display unit 180 of the display device 100 corresponds to a movement of the remote control device 200. Since the corresponding pointer 205 is moved and displayed according to a movement on a 3D space as show in the drawing, the remote control device 200 may be referred to as a spatial remote control device.

Fig. 4(b) illustrates that if a user moves the remote control device 200, the pointer 205 displayed on the display unit 180 of the display device 100 is moved to the left according to the movement of the remote control device 200.

Information on a movement of the remote control device 200 detected through a sensor of the remote control device 200 is transmitted to the display device 100. The display device 100 may calculate the coordinates of the pointer 205 from the information on the movement of the remote control device 200. The display device 100 may display the pointer 205 to match the calculated coordinates.

Fig. 4(c) illustrates that while a specific button in the remote control device 200 is pressed, a user moves the remote control device 200 away from the display unit 180. Thus, a selected region in the display unit 180 corresponding to the pointer 205 may be zoomed in and displayed in an enlarged size.

On the other hand, if a user moves the remote control device 200 close to the display unit 180, a selection area in the display unit 180 corresponding to the pointer 205 may be zoomed out and displayed in a reduced size.

On the other hand, if the remote control device 200 is moved away from the display unit 180, a selection area may be zoomed out and if the remote control device 200 is moved closer to the display unit 180, a selection area may be zoomed in.

Additionally, if a specific button in the remote control device 200 is pressed, recognition of a vertical or horizontal movement may be excluded. In other words, if the remote control device 200 is moved away from or closer to the display unit 180, the up, down, left, or right movement cannot be recognized and only the back and forth movement may be recognized. While a specific button in the remote control device 200 is not pressed, only the pointer 205 is moved according to the up, down, left or right movement of the remote control device 200.

Moreover, the moving speed or moving direction of the pointer 205 may correspond to the moving speed or moving direction of the remote control device 200.

Furthermore, a pointer in this specification means an object displayed on the display unit 180 in response to an operation of the remote control device 200. Therefore, in addition to the arrow form displayed as the pointer 205 in the drawing, various forms of objects are possible. For example, the above concept includes a point, a cursor, a prompt, and a thick outline. Then, the pointer 205 may be displayed in correspondence to one point of a horizontal axis and a vertical axis on the display unit 180 and also may be displayed in correspondence to a plurality of points such as a line and a surface.

Meanwhile, the display device 100 is connected to an external speaker and transmits an audio signal to the external speaker, and the external speaker can output audio of an image that the user is watching based on the transmitted audio signal. The display device 100 can be connected to a plurality of external speakers, and each of the plurality of external speakers connected to the display device 100 can output audio of an image that the user is watching. At this time, the user may want to adjust the volume of only some of the plurality of external speakers according to the distance from the display device 100 or the like.

However, when a display device 100 and a plurality of external speakers are connected, there is a problem in that it is difficult to know which of the plurality of external speakers is adjusting the volume when there is a volume adjustment command.

Accordingly, a display device 100 according to one embodiment of the present disclosure is intended to enable the volume to be adjusted by selecting some of the plurality of external speakers when connected to a plurality of external speakers upon receiving a volume adjustment command.

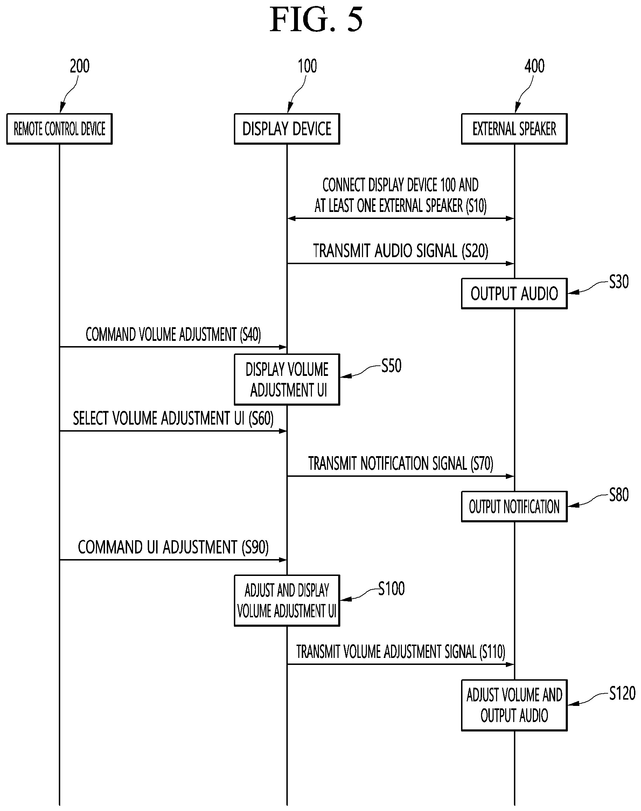

First, an explanation is given with reference to Fig. 5.

Fig. 5 is a ladder diagram illustrating an operating method of a display device according to one embodiment of the present disclosure.

The display device 100 can be connected to at least one external speaker 400 (S10).

The wireless communication interface 173 can be connected to at least one external speaker 400. The wireless communication interface 173 can be connected to at least one external speaker 400 before an image is displayed on the display 180 or while an image is displayed on the display 180.

An audio signal of an image displayed on a display 180 in a display device 100 can be transmitted to an external speaker 400 (S20).

The controller 170 can transmit audio signals to each of the plurality of external speakers 400 when the display device 100 is connected to a plurality of external speakers 400.

An external speaker 400 can output audio based on a received audio signal (S30).

The external speaker 400 can output audio at a predetermined volume based on the received audio signal. The predetermined volume may be the volume last output by the external speaker 400. Alternatively, the predetermined volume may be the volume set as the initial volume of the external speaker 400.

Meanwhile, even if an external speaker 400 is connected, audio may be output from the speaker 185 included in the display device 100.

The remote control device 200 can transmit a volume adjustment command to the display device 100 (S40).

A user can press a volume adjustment button 235 provided on a remote control device 200 while an image is displayed on the display 180 and audio is output from an external speaker 400, and accordingly, the remote control device 200 can transmit a volume adjustment command to the display device 100.

The volume adjustment command may be a command to adjust the volume of at least some of the speaker 185 and the plurality of external speakers 400. The volume adjustment command may be a command to adjust the volume of at least some of the speaker 185 and the plurality of external speakers 400 to be larger or smaller.

Meanwhile, the user can press the volume adjustment button 235 provided on the remote control device 200 to cause the remote control device 200 to transmit a volume adjustment command to the display device 100, but this is only an example, and it is reasonable to assume that the method for transmitting the volume adjustment command is not limited thereto.

When the display device 100 receives a volume adjustment command, it can display a volume adjustment UI for adjusting the volume of the speaker 185 and the external speaker 400 (S50).

The controller 170 may display a volume adjustment UI when receiving a volume adjustment command. The volume adjustment UI may be a UI (User Interface) for adjusting the volume of the speaker 185 and the external speaker 400. The volume adjustment UI may visually display the current volume of the corresponding speaker 185 or the external speaker 400. For example, if the volume adjustment UI is in the form of a bar, the higher the height of the bar filled in may mean that the volume of the speaker 185 or the external speaker 400 corresponding to the volume adjustment UI is louder.

In addition, the volume adjustment UI is displayed and adjusted according to the UI adjustment command, and the volume of the speaker 185 or the external speaker 400 can be adjusted in response to the volume adjustment UI displayed and adjusted.

The remote control device 200 can transmit a command to select at least one of the displayed volume adjustment Uls (S60).

The user can select at least one of the volume adjustment Uls displayed on the remote control device 200 or by voice command. Accordingly, the remote control device 200 can transmit a command to select at least one of the volume adjustment Uls displayed on the display device 200.

The display device 100 can transmit a notification signal to an external speaker 400 corresponding to a volume adjustment UI selected by the user (S70).

The controller 170 can transmit a notification signal to an external speaker 400 corresponding to a volume adjustment UI selected by the user.

The notification signal may include any one of a notification sound signal, an LED signal, and a vibration signal.

An external speaker 400 that receives a notification signal can output a notification based on the notification signal (S80).

An external speaker that receives a notification sound signal can output a notification sound, an external speaker that receives an LED signal can output an LED lighting effect, and an external speaker that receives a vibration signal can output vibration.

Accordingly, the user can easily know which of the multiple external speakers 400 has its volume adjusted.

The remote control device 200 can transmit a UI adjustment command (S90).

The user can check which external speaker 400 outputs the notification, and if the external speaker 400 outputting the notification is the external speaker 400 whose volume is to be adjusted, the user can press the volume adjustment button 235 provided on the remote control device 200. Accordingly, the remote control device 200 can transmit a UI adjustment command to the display device 100.

When the controller 170 receives a UI adjustment command, the controller can adjust and display a volume adjustment UI in response to the UI adjustment command (S100).

For example, if the volume adjustment UI is in the form of a bar and the UI adjustment command is a command to increase the height of the bar by one level, the controller 170 can display the bar so that the filled height increases by one level. In addition, if the volume adjustment UI is in the form of a bar and the volume adjustment command is a command to decrease the volume by one level, the controller 170 can display the bar so that the filled height decreases by one level.

When the controller 170 receives a UI adjustment command, the controller can adjust and display a volume adjustment UI and transmit a volume adjusting signal corresponding to the UI adjustment command to an external speaker 400 (S110).

For example, the controller 170 may indicate that the height of the bar is increased by one level and transmit a volume adjustment signal so that a volume one level higher is output from the external speaker 400. Additionally, the controller 170 may indicate that the height of the bar is decreased by one level and transmit a volume adjustment signal so that a volume one level lower is output from the external speaker 400.

An external speaker 400 that receives a volume adjustment signal can output audio by adjusting the volume based on the volume adjustment signal (S120).

For example, when the external speaker 400 receives a volume adjustment signal that causes the volume to be output at one level lower, the external speaker can output audio at one level higher than the volume of the audio that was being output before receiving the volume adjustment signal. In addition, when the external speaker 400 receives a volume adjustment signal that causes the volume to be output at one level higher, the external speaker can output audio at one level lower than the volume of the audio that was being output before receiving the volume adjustment signal.

In summary, if a display device 100 according to one embodiment of the present disclosure has a plurality of external speakers 400 connected to the display device, the display device can display a plurality of volume adjustment Uls for adjusting the volume of each of the plurality of external speakers 400.

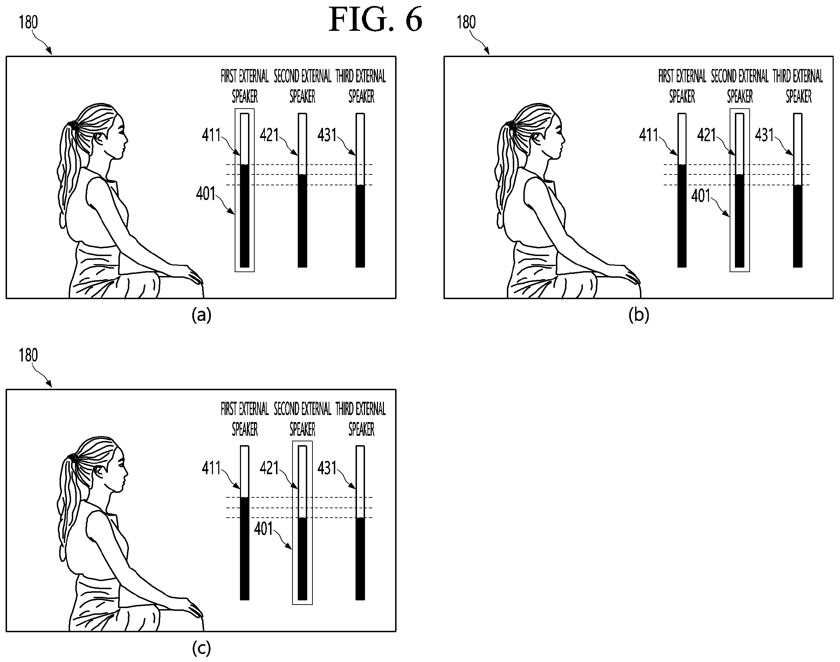

Next, referring to Fig. 6, an operation of displaying a volume adjustment UI for adjusting the volume of some of a plurality of external speakers by a display device 100 according to an embodiment of the present disclosure will be described.

Fig. 6 is an exemplary drawing for explaining a screen on which a display device displays a volume adjustment UI according to one embodiment of the present disclosure.

Referring to Fig. 6 (a) to (c), a first volume adjustment UI 411 for adjusting the volume of a first external speaker 410, a second volume adjustment UI 421 for adjusting the volume of a second external speaker 420, and a third volume adjustment UI 431 for adjusting the volume of a third external speaker 430 are displayed on the display 180. The first to third volume adjustment Uls 411, 421, 431 may be displayed on the screen being viewed. When three volume adjustment Uls are displayed in this manner, three external speakers may be connected to the display device 100. The number of volume adjustment Uls displayed on the display 180 may be the same as the number of external speakers 400 connected to the display device 100.

Meanwhile, the first volume adjustment UI 411, the second volume adjustment UI 421, and the third volume adjustment UI 431 may be displayed in a bar shape as illustrated in Fig. 6. However, this is only an example, and it is reasonable to assume that the shape of the volume adjustment UI is not limited thereto.

First, Fig. 6 (a) is a drawing illustrating a screen displayed on a display 180 when a controller 170 receives a volume adjustment command.

Referring to Fig. 6 (a), the first volume adjustment UI 411 may be displayed as being filled one level higher than the second volume adjustment UI 421. When the volume adjustment UI is displayed in a bar form, the higher the volume of audio output from the external speaker, the higher the volume of the volume adjustment UI corresponding to the external speaker may be displayed. In other words, the volume of audio output from the first external speaker 410 may be two levels higher than the volume of audio output from the second external speaker 420.

In addition, referring to Fig. 6 (a), the third volume adjustment UI 431 may be displayed as being filled one level lower than the second volume adjustment UI 421. When the volume adjustment UI is displayed in the form of a bar, the lower the volume of audio output from the external speaker, the lower the volume of the volume adjustment UI corresponding to the external speaker may be displayed. In other words, the volume of audio output from the third external speaker 430 may be three levels lower than the volume of audio output from the second external speaker 420.

Meanwhile, when the controller 170 receives a volume adjustment command, the controller can further display a guide 401 together with the volume adjustment UI. The guide 401 can be displayed around the volume adjustment UI to indicate which volume adjustment UI is selected among a plurality of volume adjustment Uls.

Referring to Fig. 6 (a), the guide 401 may be displayed as a square around the first volume adjustment UI 411. The guide 401 may indicate that the selected volume adjustment UI is the first volume adjustment UI 411. In other words, when the user issues a UI adjustment command while the guide 401 is displayed around the first volume adjustment UI 411, the first volume adjustment UI 411 will be controlled and displayed. Meanwhile, it is reasonable to assume that the guide 401 being displayed as a square is merely an example, and the shape of the guide 410 is not limited thereto.

Meanwhile, the remote control device 200 can transmit a command to move the position of the guide 401.

Fig. 6 (b) is a drawing illustrating a screen where a guide 401 is displayed around a second volume adjustment UI 421. As illustrated in Fig. 6 (a), when a guide 401 is displayed around a first volume adjustment UI 411, a user can press a right button among the direction buttons 213 of a remote control device 200. Accordingly, the remote control device 200 can transmit a command to move the position of the guide 401 to the right in the display device 100, and the controller 170 can cause the guide 410 to move to the right and be displayed around the second volume adjustment UI 421 based on the received command. Accordingly, the guide 401 can indicate that the selected volume adjustment UI is the second volume adjustment UI 421.

Next, Fig. 6 (c) is a drawing illustrating a screen displayed on the display 180 when the controller 170 receives a UI adjustment command to control the second volume adjustment UI 421.

Referring to Fig. 6 (c), the filled height of the second volume adjustment UI 421 is different from the filled height of the second volume adjustment UI 421 illustrated in Fig. 6 (a) to (b). In addition, the filled heights of the unselected first volume adjustment UI 411 and third volume adjustment UI 431 are the same as the filled heights of the first volume adjustment UI 411 and third volume adjustment UI 431 illustrated in Fig. 6 (a) to (b). In other words, some of the first to third volume adjustment Uls may be adjusted and displayed. The user may press the volume adjustment button 235 of the remote control device 200 while the guide 401 is displayed around the second volume adjustment UI 421, or press the confirmation button 238 and then press the volume adjustment button 235. Accordingly, the remote control device 200 can transmit a UI adjustment command to adjust the second volume adjustment UI 421 to the display device 100, and the controller 170 can adjust and display the second volume adjustment UI 421 based on the received UI adjustment command.

In addition, the filled height of the second volume adjustment UI 421 illustrated in Fig. 6 (c) is one level lower than the filled height of the first volume adjustment UI 411 illustrated in Fig. 6 (a) to (b). The controller 170 can adjust and display the volume adjustment UI in response to the received UI adjustment command, and transmit a volume adjustment signal corresponding to the UI adjustment command to the external speaker 400. In addition, the external speaker 400 can adjust and output the volume of audio based on the received volume adjustment signal. Since the second volume adjustment UI 421 of Fig. 6 (c) is filled one level lower than the second volume adjustment UI 421 of Fig. 6 (a) to (b), the volume of the second external speaker 420 can be one level lower than the volume of the second external speaker 420 output in Fig. 6 (a) to (b). In other words, since only the volume adjustment UI selected by the user is adjusted and displayed, the volume of only the external speaker corresponding to the selected volume adjustment UI can be adjusted and output.

In summary, if there are a plurality of external speakers 400 connected to the display device, the controller 170 can display a plurality of volume adjustment Uls for adjusting the volume of each of the a plurality of external speakers 400.

Accordingly, some of the plurality of external speakers 400 can be selected to control the volume, creating a sound environment optimized for the user.

Meanwhile, the user may want to adjust the volume of the speaker 185 included in the display device 100 rather than the external speaker 400 connected to the display device 100.

Accordingly, the display device 100 according to one embodiment of the present disclosure is intended to display a volume adjustment UI for adjusting the volume of audio output from the speaker 185 when receiving a volume adjustment command.

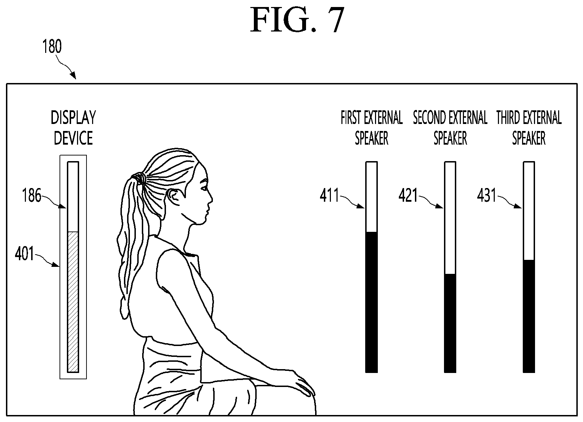

Fig. 7 is an exemplary drawing for explaining a screen in which a display device according to one embodiment of the present disclosure displays a volume adjustment UI of a speaker and an external speaker.

Referring to Fig. 7, the same screen as that illustrated in Fig. 6 may be displayed on the display 180. However, unlike that illustrated in Fig. 6, the display 180 may further display a fourth volume adjustment UI 186 for adjusting the volume of the speaker 185 included in the display device 100. The name of the display device 100 may be displayed at the top of the fourth volume adjustment UI 186 so that it can be recognized as a volume adjustment UI for adjusting the display device 100. Meanwhile, the fourth volume adjustment UI 186 may be displayed at a predetermined distance from the volume adjustment UI for adjusting the external speaker 400 so that it can be distinguished from the volume adjustment UI for adjusting the external speaker 400. Alternatively, the fourth volume adjustment UI may be displayed in a different color or in a different form from the volume adjustment UI.

The guide 401 may be displayed on the fourth volume adjustment UI 186 or moved to the periphery of the fourth volume adjustment UI 186. Accordingly, the user may adjust the volume of not only the external speaker 400 but also the speaker 185. For example, the user may press the volume adjustment button 235 of the remote control device 200 while the guide 401 is displayed on the fourth volume adjustment UI 186, and accordingly, the remote control device 200 may transmit a UI adjustment command for adjusting the fourth volume adjustment UI 186. Accordingly, the controller 170 may adjust and display the fourth volume adjustment UI 186 in response to the received UI adjustment command. In addition, the controller 170 may adjust the volume of the speaker 185 in response to the UI adjustment command.

Meanwhile, if at least one external speaker 400 of the display device 100 is connected, audio may not be output from the speaker 185. In this case, if there is a UI adjustment command for adjusting the fourth volume adjustment UI 186, the volume of all external speakers 400 connected to the display device 100 may be adjusted simultaneously.

In summary, the display device 100 according to one embodiment of the present disclosure can display a volume adjustment UI for adjusting the volume of the speaker 185 included in the display device 100 even when a volume adjustment command is given while an external speaker 400 is connected.

Accordingly, while allowing the volume of some of the plurality of external speakers 400 to be adjusted, it is also possible to adjust only the volume of the display device 100 or to adjust the volume of all connected external speakers 400 simultaneously, so that convenience in use can be increased.

Meanwhile, a user may want to adjust the volume of two or more external speakers among a plurality of external speakers 400 connected to the display device 100. Accordingly, the display device 100 according to one embodiment of the present disclosure allows the user to select the volume adjustment UI of each of two or more external speakers 400 simultaneously.

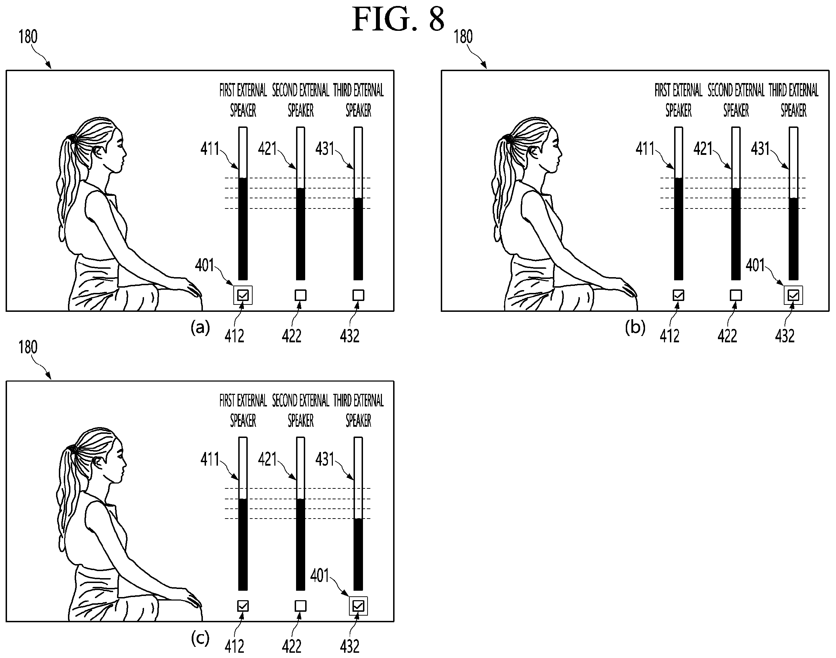

Fig. 8 is an exemplary drawing for explaining a screen displayed by a display device according to one embodiment of the present disclosure to simultaneously control two or more volume adjustment Uls.

Referring to Fig. 8 (a) to (c), a first volume adjustment UI 411 for adjusting the volume of a first external speaker 410, a second volume adjustment UI 421 for adjusting the volume of a second external speaker 420, and a third volume adjustment UI 431 for adjusting the volume of a third external speaker 430 may be displayed on the display 180. The first to third volume adjustment Uls 411, 421, 431 may be displayed on a screen being viewed. When three volume adjustment Uls are displayed in this manner, three external speakers may be connected to the display device 100. The number of volume adjustment Uls displayed on the display 180 may be the same as the number of external speakers 400 connected to the display device 100. Meanwhile, the first volume adjustment UI 411, the second volume adjustment UI 421, and the third volume adjustment UI 431 may be displayed in a bar shape as illustrated in Fig. 8. However, this is only an example, and it is reasonable to assume that the shape of the volume adjustment UI is not limited thereto.

Additionally, the display 180 may further display a first icon 412 for selecting a first volume adjustment UI 411, a second icon 422 for selecting a second volume adjustment UI 421, and a third icon 432 for selecting a third volume adjustment UI 431. The icons may include check boxes. Additionally, the number of icons may be the same as the number of volume adjustment Uls.

In addition, a guide 401 for indicating a selected volume adjustment UI may be further displayed on the display 180. The guide 401 may be displayed around the volume adjustment UI, but when an icon for selecting a volume adjustment UI is further displayed, it may be displayed around the icon as illustrated in Fig. 8.

First, Fig. 8 (a) is a drawing illustrating a screen displayed on a display 180 when a controller 170 receives a volume adjustment command.

Referring to Fig. 8 (a), the first icon 412 is checked. The checked icon may mean that the volume adjustment UI corresponding to the icon is selected. Accordingly, the checked first icon 412 may mean that the first volume adjustment UI 411 is selected.

Meanwhile, when the controller 170 receives a volume adjustment command, the controller can further display a guide 401 together with the volume adjustment UI. The guide 401 can be displayed around an icon to indicate which icon among a plurality of icons is checked or unchecked.

Referring to Fig. 8 (a), a guide 401 may be displayed as a square around a first icon 412. The guide 401 may indicate that the icon to be selected is the first icon 412. In other words, when the guide 401 is displayed around the first icon 412, the user may check or uncheck the first icon 412 by pressing the confirmation button 238 of the remote control device 200.

Fig. 8 (b) is a drawing illustrating a screen where the first icon 412 and the third icon 432 are checked. As illustrated in Fig. 8 (a), the user can press the right button among the direction buttons 213 twice while the first icon 432 is checked, and accordingly, the remote control device 200 can transmit a command to the display device 100 to move the guide to the right twice. The controller 170 can move the guide 401 to the vicinity of the third icon 432 based on the received command. In addition, the user can further check the third icon 432 by pressing the confirmation button 238 of the remote control device 200 while the guide 401 is displayed around the third icon 432. When the confirmation button 238 is pressed while the guide 401 is displayed around the checked icon, the icon is unchecked, and the selection of the volume adjustment UI is deselected. In addition, when a button displayed around an icon that is not checked in the guide 401 is pressed, the icon can be checked to select a volume adjustment UI. Since the first icon 412 and the third icon 432 are checked, the first volume adjustment UI 411 and the third volume adjustment UI 431 may be selected. The user can press the volume adjustment button 235 of the remote control device 200 while the first volume adjustment UI 411 and the third volume adjustment UI 431 are selected. Accordingly, the remote control device 200 can transmit a UI adjustment command to the display device 100 to adjust the first volume adjustment UI 411 and the third volume adjustment UI 431.

Next, Fig. 8 (c) is a drawing illustrating a screen displayed on the display 180 when the controller 170 receives a UI adjustment command made by the user by selecting the first volume adjustment UI 411 and the third volume adjustment UI 431. The first volume adjustment UI 411 and the third volume adjustment UI 431 of Fig. 8 (c) are filled one level lower than the first volume adjustment UI 411 and the third volume adjustment UI 431 of Fig. 8 (a) and (b). The controller 170 can simultaneously control and display the first volume adjustment UI 411 and the third volume adjustment UI 431 based on the received UI adjustment command. In addition, the controller 170 transmits a volume adjustment signal to adjust the volume of the first external speaker 410 and the third external speaker 430 to one level lower, and the first external speaker 410 and the third external speaker 430 can output audio by adjusting the volume of the audio to one level lower based on the received volume adjustment signal.

In summary, when the controller 170 receives a command adjustment command after two or more volume adjustment Uls are selected from among a plurality of volume adjustment Uls, it can simultaneously adjust the volume of each of a plurality of external speakers 400 corresponding to each of the plurality of volume adjustment Uls.

Accordingly, since there is no need to issue volume adjustment commands multiple times to adjust the volume of two or more external speakers 400, the loss of immersion in the image being viewed during the volume adjustment process can be minimized.

Meanwhile, the more external speakers 400 connected to the display device 100, the more volume adjustment Uls the controller 170 may display when receiving a volume adjustment command. Accordingly, it may be difficult for a user to find a volume adjustment UI corresponding to an external speaker for which the user wishes to control the volume.

Accordingly, a display device 100 according to one embodiment of the present disclosure is intended to display a plurality of volume adjustment Uls for adjusting the volume of each of a plurality of external speakers based on the priority of each of the plurality of external speakers.

For example, when the controller 170 displays a plurality of volume adjustment Uls from left to right, the volume adjustment UI for adjusting the external speaker with the highest priority may be displayed at the leftmost position. Alternatively, when the controller 170 displays the volume adjustment UIs from top to bottom, the volume adjustment UI for adjusting the external speaker with the highest priority may be displayed at the topmost position. This is merely an example, and it is reasonable that the method of displaying the volume adjustment UI is not limited thereto. However, in the present disclosure, it is assumed that the higher the priority of the external speaker, the more the corresponding volume adjustment UI is displayed on the left.

The controller 170 may obtain a priority for each of the plurality of external speakers 400 based on at least some of the following factors: a distance between each of the plurality of external speakers 400 and the display device 100, an order in which each of the plurality of external speakers 400 is connected to the display device 100, a number of times each of the plurality of external speakers 400 is connected to the display device 100, and a frequency with which the volume of each of the plurality of external speakers 400 is adjusted.

Next, a method for the controller 170 to obtain the priority of each of the plurality of external speakers 400 will be described in detail.

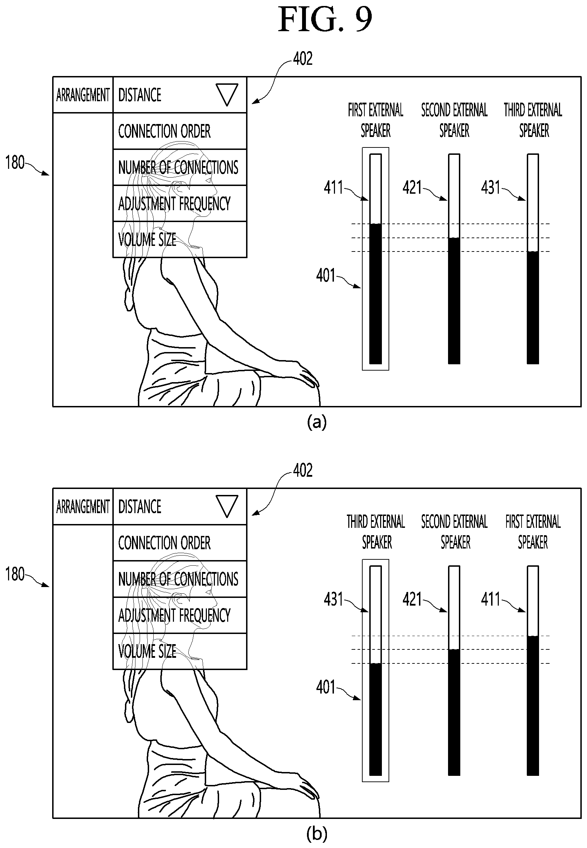

The controller 170 can obtain priorities for each of the plurality of external speakers 400 based on the volume of each of the plurality of external speakers 400. In relation to this, a detailed description will be given with reference to Fig. 9.

Fig. 9 is an exemplary drawing for explaining a screen in which a display device according to one embodiment of the present disclosure displays a volume adjustment UI based on the priority of each of a plurality of external speakers.

Figs. 9 (a) and (b) are drawings illustrating a display 180 screen that is displayed when the controller 170 receives a volume adjustment command.

The second volume adjustment UI 421 is filled one level higher than the third volume adjustment UI 431. This may mean that the volume of the second external speaker 420 is one level higher than the volume of the third external speaker 430. In addition, the first volume adjustment UI 411 is filled one level higher than the second volume adjustment UI 421. This may mean that the volume of the first external speaker 410 is one level higher than the volume of the second external speaker 420. In other words, the volume of the first external speaker 410 may be the loudest, and the volume of the third external speaker 430 may be the quietest.

Referring to Fig. 9 (a), it is assumed that the external speaker with a higher priority is displayed on the left, so it can be seen that the first volume adjustment UI 411 for adjusting the volume of the first external speaker 410 is displayed in the first priority, the second volume adjustment UI 421 for adjusting the volume of the second external speaker 420, and the volume adjustment UI 431 for adjusting the volume of the third external speaker 430 are displayed in the third priority.

The controller 170 can obtain that an external speaker with a larger volume has a higher priority. In addition, the controller 170 can obtain that an external speaker with a larger volume has a higher priority when the user's volume adjustment command is a command to decrease the volume.

Meanwhile, referring to Fig. 9 (b), it is assumed that the external speaker with a higher priority is displayed on the left, so it can be seen that the third volume adjustment UI 431 for adjusting the volume of the third external speaker 430 is displayed in the first priority, the second volume adjustment UI 421 for adjusting the volume of the second external speaker 420, and the volume adjustment UI 411 for adjusting the volume of the first external speaker 410 are displayed in the third priority.

The controller 170 can obtain that an external speaker with a lower volume has a higher priority. In addition, the controller 170 can obtain that an external speaker with a lower volume has a higher priority when the user's volume adjustment command is a command to adjust the volume loudly.

In Fig. 9, the volume adjustment UI for adjusting the volume of external speakers 400 is described as being arranged in order of high or low volume, but this is only an example, and the order may be changed based on any one of the priorities described above.

According to one embodiment, the controller 170 may further display a menu 402 for selecting the order in which the volume adjustment Uls are arranged. The menu 402 for selecting the order in which the volume adjustment Uls are arranged may include items such as distance, connection order, number of connections, adjustment frequency, and volume size. The user may select each item by pressing the direction button 213 or the confirmation button 238 of the remote control device 200, and accordingly, the remote control device 200 may transmit a command to select each item to the display device 100. The controller 170 may receive the command to select each item, and may obtain the priority of each of the plurality of external speakers 400 based on the received priority. Then, the controller 170 may sort and display a volume adjustment UI for adjusting the volume of each of the plurality of external speakers 400 based on the obtained priority.

Next, the method by which the controller 170 obtains priority will be specifically described.

The controller 170 can obtain priorities for each of the plurality of external speakers 400 based on the distance from each of the plurality of external speakers 400.

For example, when the controller 170 receives a command to select a distance item, the controller 170 can obtain the distance from each of the plurality of external speakers 400 based on the intensity of the signal received from each of the plurality of external speakers 400. The farther the external speaker 400 is from the display device 100, the weaker the intensity of the signal that the controller 170 receives from the external speaker 400. Accordingly, the controller 170 can obtain that the external speaker 400 is farther away as the intensity of the signal received from the external speaker 400 is weaker. However, this is merely an example, and it is reasonable to assume that the method by which the controller 170 obtains the distance from each of the plurality of external speakers is not limited thereto.

The controller 170 can be obtained by giving a higher priority to an external speaker 400 that is farther away from the display device 100. Accordingly, the volume output from a location farther away from the display 180 can be adjusted to adjust the audio spatial sense.

Conversely, the controller 170 can obtain that the external speaker 400 closer to the display device 100 has a higher priority. Accordingly, the volume output from a location closer to the display 180 on which the image screen is displayed can be adjusted with priority.

The controller 170 can obtain priorities for each of the plurality of external speakers 400 based on the order in which each of the plurality of external speakers 400 is connected to the display device 100.

For example, when the controller 170 receives a command to select a connection order item, each of the plurality of external speakers 400 can obtain a priority based on the order in which they are connected to the display device 100.

The most recently connected external speaker 400 may be an external speaker that has not yet been adjusted to an appropriate volume for the user. Accordingly, the controller 170 may obtain that the external speaker 400 most recently connected to the display device 100 has the highest priority.

Meanwhile, the external speaker 400 connected first may be the external speaker 300 used as the main by the user. Accordingly, the controller 170 may obtain that the external speaker 400 connected first has the highest priority.

The controller 170 can obtain a priority for each of the plurality of external speakers 400 based on the number of times each of the plurality of external speakers 400 is connected to the display device 100.

For example, when the controller 170 receives a command to select a connection order item, each of the plurality of external speakers 400 can obtain a priority based on the number of times each is connected to the display device 100.

The external speaker 400 connected to the display device 100 the most may be the external speaker 400 that the user uses as the main speaker. Accordingly, the controller 170 may obtain a higher priority for the external speaker 400 that is connected to the display device 100 the most.

Meanwhile, the external speaker 400 connected to the display device 100 the least number of times may be an external speaker 400 that is not adjusted to a volume suitable for the user. Accordingly, the controller 170 can obtain a higher priority for an external speaker 400 that is connected to the display device 100 less frequently.

The controller 170 can obtain a priority based on the frequency with which the volume of each of the plurality of external speakers 400 is adjusted for each of the plurality of external speakers 400. For example, when the controller 170 receives a command to select an adjustment frequency item, the controller 170 can obtain a priority based on the number of times the volume of each of the plurality of external speakers 400 is adjusted for a preset period of time.

The more times an external speaker 400 is adjusted during a preset time period, the more frequently the user adjusts the volume of the external speaker 400. Accordingly, the controller 170 can obtain that an external speaker 400 that is adjusted during a preset time period has a higher priority.

Meanwhile, the external speaker 400 that has been adjusted fewer times during a preset time may be an external speaker 400 that has not been adjusted to a volume suitable for the user. Accordingly, the controller 170 may obtain that the external speaker 400 that has been adjusted fewer times during a preset time has a higher priority.

However, it is reasonable to assume that the method in which the above-described controller 170 obtains the priority of a plurality of external speakers 400 is only an example and is not limited thereto.

**In** summary, a display device 100 according to one embodiment of the present disclosure can obtain the priority of each of a plurality of external speakers 400 and display a volume adjustment **UI** based on the priority.

Accordingly, the convenience of use can be increased by first displaying the volume adjustment UI of the external speaker 400 whose volume the user is most likely to control among the plurality of external speakers 400.

Meanwhile, the display device 100 according to one embodiment of the present disclosure may also adjust the volume of some of the plurality of external speakers 400 by entering a menu for changing the setting status of the external speakers when a plurality of external speakers 400 are connected.

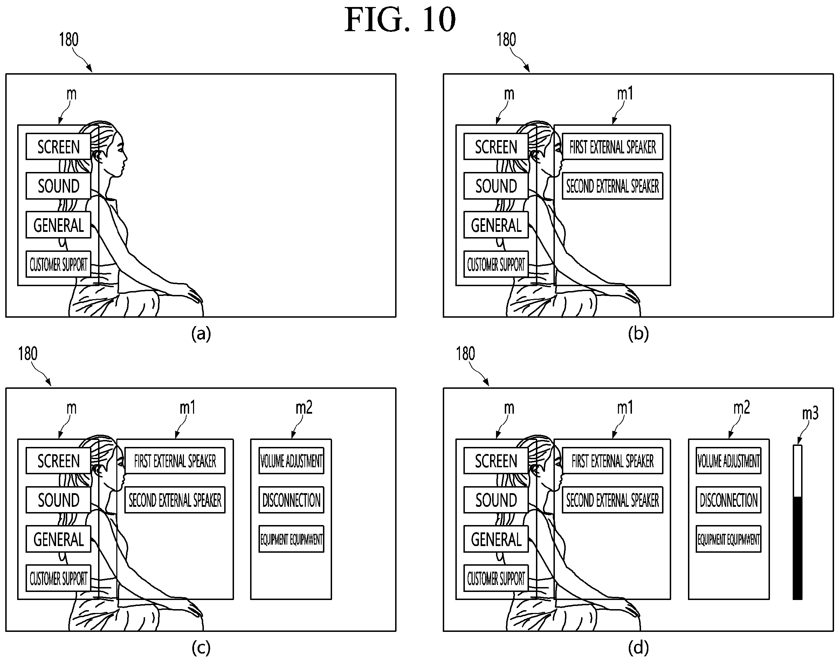

In relation to this, it is explained with reference to Fig. 10.

Fig. 10 is an exemplary drawing for explaining a screen in which a display device according to one embodiment of the present disclosure displays a menu for changing the usage status setting of a display device or an external speaker.

When the controller 170 receives a user input for entering the setting menu, it can display a setting menu (m) for changing the usage status of the display device 100 or external speaker 400 as illustrated in Fig. 10 (a). The setting menu m can include screen, sound, general, and customer support items.

When the controller 170 receives a user input for selecting an audio item from the setting menu m, it may further display a first menu including items corresponding to each of a plurality of external speakers 400 connected to the display device 100, as illustrated in Fig. 10 (b). For example, the first menu may include items corresponding to the first external speaker 310 and the second external speaker 320.

In addition, when the controller 170 receives a user input for selecting one of the items corresponding to each of the plurality of external speakers 400, the controller 170 may further display a second menu m2 for changing the usage status of the external speaker 400 corresponding to the selected item, as illustrated in Fig. 10 (c). For example, when the controller 170 receives a user input for selecting an item corresponding to the first external speaker 310, the controller 170 may further display a second menu m2 for changing the usage status of the first external speaker 310. The second menu m2 may include items for volume adjustment, disconnection, and equipment deletion.

When the controller 170 receives a user input for selecting a volume control item, the controller 170 may further display a volume adjustment UI m3 for adjusting the volume of the external speaker 400 as illustrated in (d) of Fig. 10. For example, when the controller 170 receives a user input for selecting a volume control item included in a second menu m2 displayed by receiving a user input for selecting an item corresponding to the first external speaker 310, the controller 170 may further display a volume adjustment UI m3 for adjusting the volume of the first external speaker 310.

When a volume adjustment UI is displayed, the user can adjust the volume adjustment UI by issuing a UI adjustment command. For example, when a volume adjustment UI m3 for adjusting the volume of the first external speaker 310 is displayed, the user can control the volume adjustment UI by issuing a UI adjustment command.

When receiving a UI adjustment command, the controller 170 may adjust and display a volume adjustment UI in response to the volume adjustment command, and transmit a volume adjustment signal to the external speaker 400 so that the volume of audio output from the external speaker 400 is adjusted. For example, when receiving a UI adjustment command for adjusting a volume adjustment UI for adjusting the volume of the first external speaker 310, the controller 170 may adjust and display the volume adjustment UI, and transmit a volume adjustment signal to the first external speaker 310. Accordingly, the first external speaker 310 may adjust and output the volume of audio based on the received volume adjustment signal.

Meanwhile, the volume adjustment UI may be displayed when receiving a user input for selecting a volume control item from the second menu as described above, but this is merely an example and is not limited thereto. In other words, the volume adjustment UI may be displayed by being included in each item corresponding to each of the plurality of external speakers 400 in the first menu. In addition, the volume adjustment UI may be displayed by being included in the volume adjustment item in the second menu. Accordingly, the user has the advantage of being able to adjust the volume of any one of the plurality of external speakers 400 without entering a submenu.

In summary, the display device 100 according to one embodiment of the present disclosure can enter a menu for setting the usage status of the external speakers 400 and adjust the volume of some of the connected external speakers 400.

Accordingly, the user can change different usage states of the display device 100 or external speakers 400 and adjust the volume of some of the external speakers 400, thereby increasing convenience of use.

A display device 100 according to one embodiment of the present disclosure can create an optimized sound environment for a user by adjusting the volume of some of a plurality of external speakers 400.

In addition, the display device 100 according to one embodiment of the present disclosure can easily adjust the volume of some of a plurality of speakers and minimize the decrease in immersion in the image being viewed during the volume adjustment process.

According to one embodiment of the present disclosure, the above-described method can be implemented as a processor-readable code on a medium in which a program is recorded. Examples of the processor-readable medium include a ROM, a RAM, a CD-ROM, a magnetic tape, a floppy disk, an optical data storage device, and the like.

The display device described above is not limited to the configuration and method of the embodiments described above, and the embodiments may be configured by selectively combining all or part of the embodiments so that various modifications can be made.

## Claims

1. A display device comprising:
a speaker;
a display that displays a volume adjustment UI for adjusting the volume of audio output through the speaker;
a wireless communication interface that connects to at least one external speaker; and
a controller that displays the volume adjustment UI for adjusting the volume of the speaker and the external speaker when connected to the external speaker upon receiving a volume adjustment command.

2. The display device of claim 1,
wherein the controller that transmits a notification signal to the external speaker corresponding to the selected volume adjustment UI when the volume adjustment UI for adjusting the volume of the external speaker is selected,.

3. The display device of claim 2,
wherein the notification signal includes one of a notification sound signal, an LED notification signal, and a vibration signal.

4. The display device of claim 1,
wherein the controller displays a plurality of volume adjustment Uls for adjusting the volume of each of the plurality of external speakers when receiving the volume adjustment command, if there are a plurality of external speakers connected to the display device.

5. The display device of claim 4,
wherein the controller simultaneously adjusts the volume of each of the plurality of external speakers corresponding to each of the plurality of volume adjustment Uls when two or more of the plurality of volume adjustment Uls are selected and then a volume adjustment command is received.

6. The display device of claim 4,
wherein the controller displays a plurality of volume adjustment Uls for adjusting the volume of each of the plurality of external speakers based on the priority of each of the plurality of external speakers.

7. The display device of claim 6,
wherein the controller obtains the priority based on the volume of each of the plurality of external speakers.

8. The display device of claim 6,
wherein the controller obtains the priority based on the distance from each of the plurality of external speakers.

9. The display device of claim 6,
wherein the controller obtains the priority based on the order in which each of the plurality of external speakers is connected to the display device.

10. The display device of claim 6,
wherein the controller obtains the priority based on the number of times each of the plurality of external speakers is connected to the display device.

11. The display device of claim 6,
wherein the controller obtains the priority based on the number of times the volume of each of the plurality of external speakers is adjusted during a preset time.
